# EUROPEAN PATENT APPLICATION

(11) **EP 4 468 274 A1**
(43) Date of publication of application: **27.11.2024**
(21) Application number: 23175708.9
(22) Date of filing: 26.05.2023
(51) Int. Cl.: G09B 5/06, G09B 5/14, H04N 7/15, G06V 40/20, G06V 40/16

(54) **METHOD AND SYSTEM FOR MANAGING A VIRTUAL CLASSROOM**

(71) Applicant: Top Victory Investments Limited, Kwun Tong, Kowloon 999077 (HK)
(72) Inventor: JAIN, Vikas, 560045 Bangalore (IN); SHARAN, Apurva, 560045 Bangalore (IN)
(74) Representative: V.O.

(57) **Abstract**

A method for managing a virtual classroom is implemented using a system (100) that includes a server (110), a lecturer device (120) associated with a lecturer, and at least one student device (140) associated with a student. The method includes: recording, by the lecturer device (120), a first audio/video (A/V) data stream associated with the lecturer; in response to receipt of the first A/V data stream from the lecturer device (120), transmitting the first A/V data stream to the student device (140) to be presented to the student; recording, by the student device (140), a second A/V data stream associated with the student; in response to receipt of the second A/V data stream, calculating, by the server (110), an attentiveness score associated with attention of the student; and transmitting the attentiveness score to the lecturer device (120).

## Description

The disclosure relates to a method and a system for managing a virtual classroom.

Recently, use of online communication has increased immensely for various reasons such as the pandemic, geo-political issues, etc. One of its related applications is distance education, which provides learning experiences to the students who cannot physically be in class. To conduct distance education, virtual classroom has been adopted. In a virtual classroom, a lecturer operates an electronic device (e.g., a personal computer) and speaks in front of a camera and a microphone. The camera continuously captures images of the lecturer and/or classroom materials (e.g., a blackboard, a presentation slide, etc), and the microphone continuously collects audio data from the lecturer. Then, the electronic device generates a data stream that includes the images and the audio data, and transmits the data stream to a cloud server. One or more of students may each operate another electronic device to receive the data stream from the cloud server, and the data stream can be played on the electronic device of each of the student(s). In some cases, the student(s) with a camera and/or a microphone may also interact with the lecturer in a manner that is similar to the lecturer giving the lecture. In turn, the electronic device of the lecturer may receive one or more data streams that include images and/or audio data of the students.

For pedagogical purposes, the lecturer needs to ensure that the students understand the materials taught by the lecturer. This may prove to be a challenge in distance education, where observing real-time reactions from the students may be unfeasible when a large number of students are simultaneously online for the lecture. Additionally, the lecturer may not be able to focus on his/her display to monitor reaction of each of the students during the lecture. For example, in the cases that the lecturer is writing on the blackboard, and therefore is facing away from the display or performing other tasks that prevents him/her from looking at the display, the reactions of the students may not be observed.

Therefore, one object of the disclosure is to provide a method for managing a virtual classroom that is capable of analyzing reactions of at least one student during a lecture.

According to an aspect of the disclosure, there is provided a system for hosting a metaverse virtual classroom according to Claim 1.

Another object of the disclosure is to provide a system that is configured to implement the above-mentioned method.

According to an aspect of the disclosure, there is provided a method for hosting a metaverse virtual classroom according to Claim 9.

Other features and advantages of the disclosure will become apparent in the following detailed description of the embodiment(s) with reference to the accompanying drawings. It is noted that various features may not be drawn to scale.
Figure 1 is a block diagram of a system for managing a virtual classroom (VC) according to one embodiment of the disclosure.
Figure 2 is a flow chart illustrating a method for managing a VC according to one embodiment of the disclosure.
Figure 3 is a schematic diagram illustrating an exemplary structure of a Bimodal Emotion Classification model according to one embodiment of the disclosure.
Figure 4, which includes pictures 4A to 4C, illustrates a number of exemplary human reactions and their associated mental states.
Figure 5 is a graph illustrating attentiveness scores of a number of students during lectures in a semester.
Figure 6 is a flow chart illustrating steps of an interactive process of the lecturer interacting with a student after determining that the student's attentiveness score is below a threshold according to one embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

Throughout the disclosure, the term "coupled to" or "connected to" may refer to a direct connection among a plurality of electrical apparatus/devices/equipment via an electrically conductive material (e.g., an electrical wire), or an indirect connection between two electrical apparatus/devices/equipment via another one or more apparatus/devices/equipment, or wireless communication.

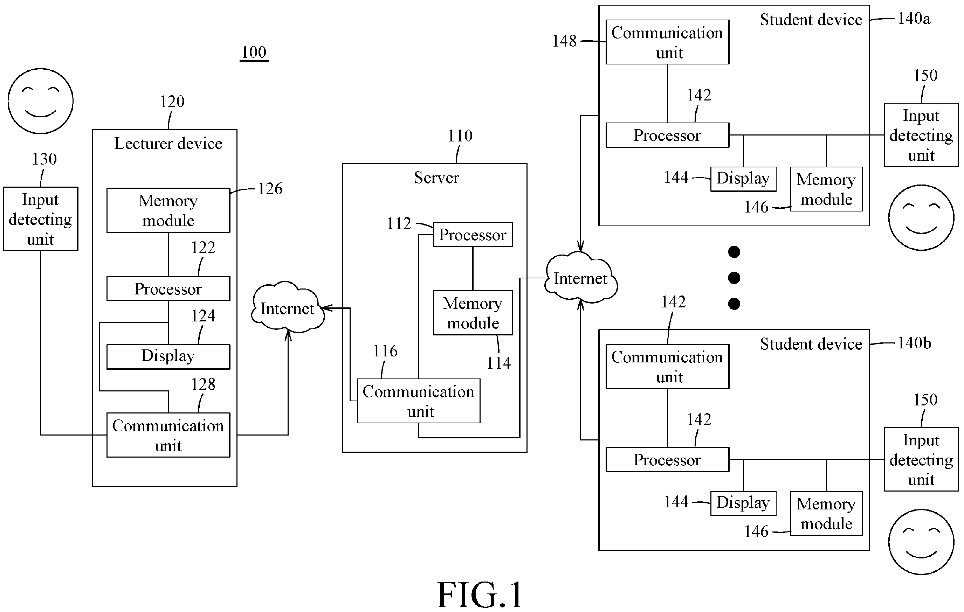

Figure 1 is a block diagram of a system 100 according to one embodiment of the disclosure. In this embodiment, the system 100 includes a server 110, a lecturer device 120, and at least one student device 140. The lecturer device 120 is operated by a lecturer, and the student device 140 is operated by a student. Each of the lecturer device 120 and the at least one student device 140 is configured to be in communication with the server 110 via a network 160 such as the Internet. In different embodiments, additional student device(s) 140 may be present for additional students (two student devices labeled 140A and 140B are present in the embodiment of Figure 1). In use, the lecturer and the student may interact using the system 100, which provides an online teaching and learning environment, such as a virtual classroom (VC).

The server 110 may be embodied using a cloud server or other computing devices, and includes a processor 112, a memory module 114, and a communication unit 116.

The processor 112 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), and/or a radio-frequency integrated circuit (RFIC), etc.

The memory module 114 may be embodied using, for example, random access memory (RAM), read only memory (ROM), programmable ROM (PROM), firmware, and/or flash memory, etc. The memory module 114 stores a software application including instructions that, when executed by the processor 112, cause the processor 112 to perform operations as described below. Specifically, the software application may be a VC software application.

The communication unit 116 may include one or more of a radio-frequency integrated circuit (RFIC), a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G), the fourth generation (4G) or fifth generation (5G) of wireless mobile telecommunications technology, or the like. The server 110 is configured to communicate with the lecturer device 120 and the student device 140 using the communication unit 116.

The lecturer device 120 may be embodied using a personal computer, a laptop, a tablet, a smartphone, or other electronic devices. The lecturer device 120 includes a processor 122, a display 124, a memory module 126, a communication unit 128, and an input detecting unit 130.

The processor 122 may include components similar to those of the processor 112 (e.g., a microprocessor) for performing operations as described below. The display 124 may be embodied using a liquid crystal display (LCD) or a light-emitting diode (LED) display, and is connected to the processor 122. The memory module 126 includes components similar to those of the memory module 114, and stores a software application including instructions that, when executed by the processor 122, cause the processor 122 to perform operations as described below. The communication unit 128 includes components similar to those of the communication unit 116, and enables communication between the lecturer device 120 and the server 110.

The input detecting unit 130 is for detecting movements and other inputs of the lecturer operating the lecturer device 120. Based on different models of computers embodying the lecturer device 120, the input detecting unit 130 may include an audio collecting component (exemplified by a microphone 130A hereinafter), and an input collecting component (exemplified by a camera 130B hereinafter). The microphone 130A is for recording audio data from the lecturer. The camera 130B is placed to face the lecturer, and is configured to continuously capture images.

The student device 140 may be embodied using a personal computer, a laptop, a tablet, a smartphone, or other electronic devices. The student device 140 includes a processor 142, a display 144, a memory module 146, a communication unit 148, and an input receiving unit 150.

The processor 142 may include components similar to those of the processor 122 (e.g., a microprocessor) for performing operations as described below. The display 144 may be embodied using an LCD display or an LED display, and is connected to the processor 142. The memory module 146 includes components similar to those of the memory module 126, and stores a software application including instructions that, when executed by the processor 142, cause the processor 142 to perform operations as described below. The communication unit 148 includes components similar to those of the communication unit 128, and enables communication between the student device 140 and the server 110.

The input receiving unit 150 includes an audio collecting component (exemplified by a microphone 150A hereinafter), and an input collecting component (exemplified by a camera 150B hereinafter). The microphone 150A is for recording audio data from the student. The camera 150B is placed to face the student, and is configured to continuously capture images.

It is noted that for the sake of brevity, in the embodiments where a plurality of student devices 140 are present, it is assumed that each of the student devices 140 is identical to one another as described above, but it is not limited to such.

It is noted that in some embodiments, one or both of the lecturer device 120 and the student device 140 may be embodied using a television device. The television device includes a processor, a television screen, an input detecting unit, a memory module and a communication unit. In some embodiments, the processor, the memory module and the communication unit may be integrated in a set-top box (STB) connected to the television screen. The processor may include components similar to those of the processor 112 for performing operations as described below. The television screen is connected to the processor. The memory module includes components similar to those of the memory module 114, and stores a software application including instructions that, when executed by the processor, cause the processor to perform the operations as described below. The communication unit includes components similar to those of the communication unit 116, and enables communication between the television device and the server 110. The input detecting unit may include an image capturing unit and an audio collecting component (exemplified by a microphone thereafter). The image capturing unit is embodied using a digital camera or a video recorder such as a webcam, a depth camera, etc., is disposed on the television screen to face a viewer of the television device, and is configured to continuously capture images. The microphone may be integrated with the STB or may be a separate component, and the microphone is for recording audio data from the lecturer or the student.

In use, the lecturer and the students may interact in an online class where the lecturer is to give a lecture, using the server 110 as a host of a VC. As such, the lecturer may first operate an interface (not depicted in the drawings) of the lecturer device 120 to communicate with the server 110, so as to transmit a signal to the server 110 for initiation of a VC.

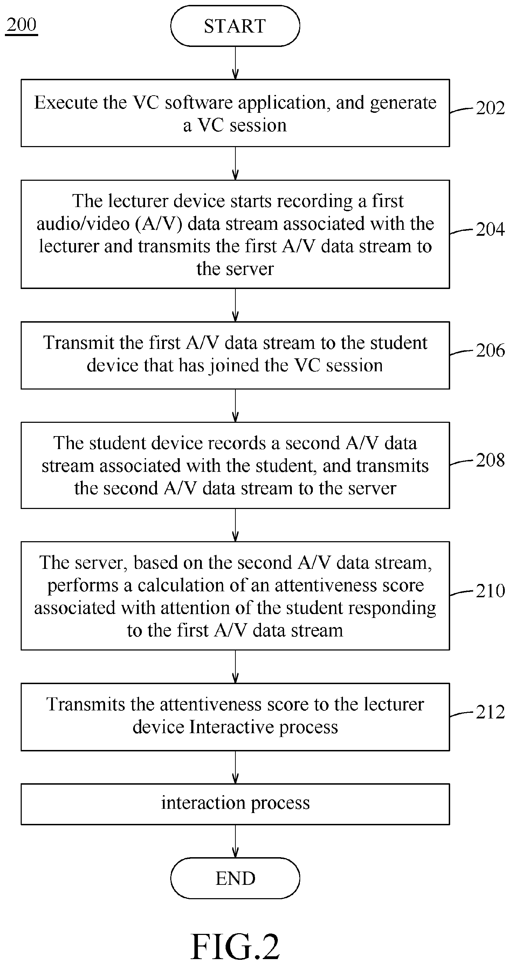

Figure 2 is a flow chart illustrating a method 200 for managing a VC according to one embodiment of the disclosure. In this embodiment, the method 200 is implemented by the system 100 as described in Figure 1. It is noted that for simplicity of the description, it is assumed that only one student is present, using one student device 140, but additional student(s) may be naturally present as well.

In step 202, in response to the receipt of the signal from the lecturer device 120, the processor 112 of the server 110 executes the VC software application, and generates a VC session. In embodiments, the VC session may enable one or more student(s) to join by operating the student device(s) 140. Specifically, the student may operate an interface (not depicted in the drawings) of the student device 140 to communicate with the server 110. The VC session may be provided to the students in the form of a link that can be accessed using a web browser or a software application. In some embodiments, a set of room number and a password may be required in order to join the VC session.

In step 204, the lecturer starts delivering the lecture, and the lecturer device 120 starts recording a first audio/video (A/V) data stream associated with the lecturer and transmitting the first A/V data stream to the server 110.

Specifically, the input receiving unit 130 is activated after the lecturer operates the interface of the lecturer device 120 to transmit the signal to the server 110; as a result, the microphone 130A starts recording audio data from the surrounding of the lecturer, and the camera 150B starts capturing images of the surrounding of the lecturer. The lecturer may also operate the interface to share and edit images (e.g., lecture notes, presentation slides, etc.) for the students. The processor 122 is configured to receive the data collected by the input receiving unit 130 as described above, and generates the first A/V data stream that includes the images and the audio data recorded by the input receiving unit 130. The processor 122 is configured to control the communication unit 128 to continuously transmit the first A/V data stream to the server 110.

In step 206, in response to receipt of the first A/V data stream from the lecturer device 120, the server 110 is configured to transmit the first A/V data stream to the student device 140 that has joined the VC session. It is noted that in embodiments where multiple student devices 140 are present in the VC session, the server 110 is configured to transmit the first A/V data stream to each of the student devices 140.

In step 208, in response to receipt of the first A/V data stream from the server 110, the student device 140 presents the first A/V data stream to the student. Specifically, the display 144 displays the images included in the first A/V data stream, and a speaker (not depicted in the drawings) plays the audio data included in the first A/V data stream.

In step 208, the student device 140 records a second A/V data stream associated with the student, and transmits the second A/V data stream to the server 110.

Specifically, during the lecture, the input receiving unit 150 of the student device 140 is also activated. That is to say, the microphone 150A starts recording audio data from the surrounding of the student, and the camera 150B starts capturing images of the surrounding of the student. The processor 142 is configured to receive the data collected by the input receiving unit 150 as described above, and generates the second A/V data stream that includes the images and the audio data recorded by the input receiving unit 150. The processor 142 is configured to control the communication unit 148 to continuously transmit the second A/V data stream to the server 110.

It is noted that in embodiments where a plurality of student devices 140 are present, each of the student devices 140 is configured to generate a unique second A/V data stream and transmit the same to the server 110.

In step 210, in response to receipt of the second A/V data stream from the student device 140, the server 110, based on the second A/V data stream, performs a calculation of an attentiveness score associated with attention of the student responding to the first A/V data stream. It is noted that in the embodiments where a plurality of students are present, the server 110 calculates a plurality of attentiveness scores associated with attention of the students, respectively.

Specifically, the processor 112 of the server 110 is configured to execute a Bimodal Emotion Classification model, which may be in the form of a neural network. It is noted that different neural networks may be employed for processing the images included in the second A/V data stream to determine the attentiveness score.

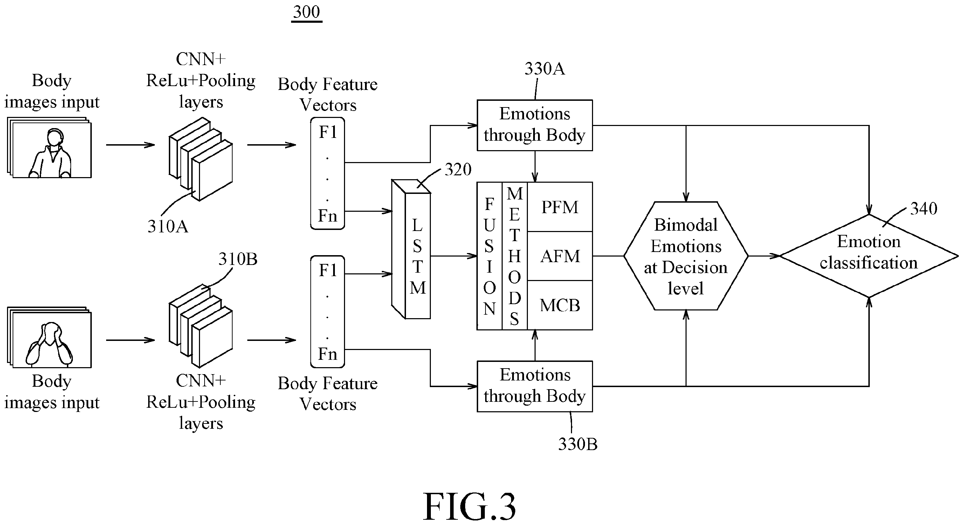

Figure 3 is a schematic diagram illustrating an exemplary structure of a Bimodal Emotion Classification model 300 that is stored in the memory module 114 of the server 110 according to one embodiment of the disclosure. It is noted that different structures may be employed for constructing the Bimodal Emotion Classification model, and is not limited to the structure as shown in Figure 3.

In use, the images included in the second A/V data stream may be used as an input of the Bimodal Emotion Classification model 300. The Bimodal Emotion Classification model 300 includes two Convolutional Neural Network (CNN) sets 310A, 310B that are configured to output a plurality of facial feature vectors and a plurality of body feature vectors, respectively. Each of the CNN sets 310A, 310B includes a CNN model, a rectified linear unit (ReLU) and a plurality of pooling layers that are connected in series.

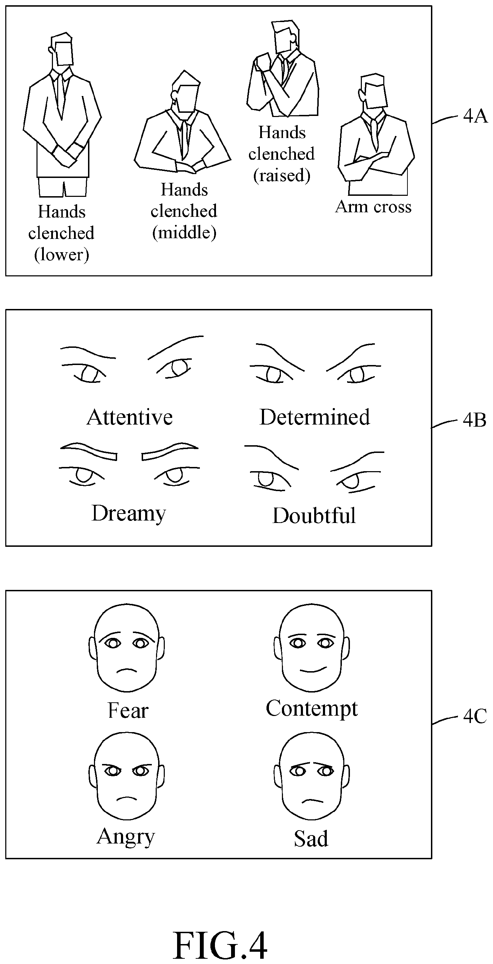

Figure 4, which includes pictures 4A to 4C, illustrates a number of exemplary human reactions and their associated mental states. Specifically, picture 4A illustrates a number of exemplary upper body gestures, picture 4B illustrates a number of exemplary eye cues and their associated mental states (e.g., attentive, determined, dreamy, doubtful, etc.), and picture 4C illustrates a number of exemplary facial cues and the associated mental states (e.g., fear, contempt, angry, sad, etc.). The images of Figure 4 may be used to pre-train the Bimodal Emotion Classification model 300.

In the embodiment of Figure 3, based on the images of the second A/V data stream, the CNN set 310A is configured to output the facial feature vectors, and the CNN set 310B is configured to output the upper body feature vectors. In some embodiments, the Bimodal Emotion Classification model 300 may include an additional CNN set that is configured to output a plurality of eye feature vectors.

Then, the facial feature vectors and the body feature vectors are transmitted to a Long Short-Term Memory (LSTM) 320 included in the Bimodal Emotion Classification model 300 as an input. Additionally, the facial feature vectors are transmitted to a facial emotion determination layer 330A so as to obtain a preliminary facial emotion dataset, and the body feature vectors are transmitted to a body emotion determination layer 330B so as to obtain a preliminary body emotion dataset. Then, the output of the LSTM 320, the preliminary facial emotion dataset and the preliminary body emotion dataset are processed together using at least one fusion method and transmitted to an emotion classification unit 340. It is noted that the fusion method are image fusion techniques for integrating more than one image to produce a merged image, and in embodiments, the fusion method implemented may be a feature-level fusion, a decision-level fusion, the product fusion method (PFM), the average fusion method (AFM), the Multimodal Compact Bilinear Pooling (MCB) fusion, etc. The emotion classification unit 340 is configured to determine a predicted emotion based on the above data processed using the fusion method.

Then, the predicted emotion is transmitted to a score calculation unit 400, which is configured to calculate, based on the predicted emotion, the attentiveness score associated with attention of the student responding to the first A/V data stream.

In embodiments, the attentiveness score may be represented as a normalized value between 0 and 1. Specifically, when the predicted emotion is one that is considered more associated with a positive mental state (e.g., happiness, calm, neutral (i.e., no particular emotion is detected), etc.), the resulting attentiveness score is closer to 1. Otherwise, when the predicted emotion is one that is considered more associated with a negative mental state (e.g., anger, disgust, fear, sadness, surprise, etc.), the resulting attentiveness score is closer to 0. In this embodiment, the attentiveness score is represented as a binary number [0, 1]. Specifically, a determination of a positive mental state results in an attentiveness score of 1, and a determination of a negative mental state results in an attentiveness score of 0. In embodiments, the score calculation unit 400 is stored in the memory module 114 of the server 110, and is implemented by a software function carrying out the aforementioned determination scheme.

It is noted that in other embodiments, various calculation and representation of the attentiveness score may be employed.

After the attentiveness score is calculated by the score calculation unit 400, in step 212, the processor 112 transmits the attentiveness score to the lecturer device 120. In this manner, the lecturer may be notified of the attentiveness score of the student.

It is noted that in embodiments, during the lecture, the calculation of the attentiveness score included in step 210 may be performed periodically. Specifically, in one example, in a lecture for five students, the calculation of the attentiveness score may be done once every five minutes. The lecture lasts 60 minutes, which is divided into four 15-minute sub-parts. The following Table 1 includes the resulting attentiveness scores recorded during the course of the lecture.

**Table 1**

| | **Lecture timeline (in minutes)** | | | | | | | | | | | |
|---|---|---|---|---|---|---|---|---|---|---|---|---|
| | **5** | **10** | **15** | **20** | **25** | **30** | **35** | **40** | **45** | **50** | **55** | **60** |
| | **Lecture sub-parts** | | | | | | | | | | | |
| | **Sub-part 1** | | | **Sub-part 2** | | | **Sub-part 3** | | | **Sub-part 4** | | |
| *Student 1* | 0 | 0 | 0 | 1 | 1 | 1 | 0 | 1 | 0 | 0 | 0 | 1 |
| *Student 2* | 1 | 1 | 1 | 1 | 1 | 1 | 1 | 1 | 1 | 1 | 1 | 1 |
| *Student 3* | 0 | 0 | 1 | 0 | 1 | 1 | 0 | 1 | 1 | 0 | 1 | 1 |
| *Student 4* | 0 | 0 | 0 | 0 | 0 | 0 | 0 | 1 | 1 | 1 | 1 | 1 |
| *Student 5* | 1 | 1 | 1 | 1 | 1 | 1 | 0 | 0 | 0 | 0 | 0 | 0 |

Using the above statistics, the attentiveness of each of the students may be further analyzed. For example, the following Table 2 includes average attentiveness scores calculated for each of the students, with respect to entirety of the lecture and to each of the sub-parts.

**Table 2**

| | **Average attentiveness for the entire lecture** | **Sub-part 1** | **Sub-part 2** | **Sub-part 3** | **Sub-part 4** |
|---|---|---|---|---|---|
| *Student 1* | **0.42** | **0.00** | 1.00 | **0.33** | **0.33** |
| *Student 2* | 1 | 1.00 | 1.00 | 1.00 | 1.00 |
| *Student 3* | 0.58 | **0.33** | 0.67 | 0.67 | 0.67 |
| *Student 4* | **0.42** | **0.00** | **0.00** | 0.67 | 1.00 |
| *Student 5* | 0.5 | 1.00 | 1.00 | **0.00** | **0.00** |
| **Average attentiveness for the sub-parts** | | **0.47** | 0.73 | 0.53 | 0.60 |
| **Average attentiveness for the lecture** | 0.58 | | | | |

In this example, threshold is set at 0.5 increments, and when the average attentiveness score during one of the sub-parts of the lecture or the entire lecture is below the threshold (shown in Table 2 in bold), it may be determined that the student may not be attentive enough during the one of the sub-parts of the lecture (e.g., student 1 in sub-parts 1, 3 and 4) or the entire lecture. In addition, general reception for each of the sub-parts of the lecture and the entire lecture may also be determined by calculating averages for all students. According to Table 2, sub-part 2 may be determined to be more well-received (and therefore, probably more well-understood) by the students.

In another example, the attentiveness scores calculated during another lecture is as shown in the following Table 3.

**Table 3**

| | **Lecture timeline (in minutes)** | | | | | | | | | | | |
|---|---|---|---|---|---|---|---|---|---|---|---|---|
| | **5** | **10** | **15** | **20** | **25** | **30** | **35** | **40** | **45** | **50** | **55** | **60** |
| | **Lecture sub-parts** | | | | | | | | | | | |
| | **Sub-part 1** | | | **Sub-part 2** | | | **Sub-part 3** | | | **Sub-part 4** | | |
| *Student 1* | 0 | 0 | 0 | 1 | 0 | 1 | 0 | 1 | 0 | 0 | 0 | 1 |
| *Student 2* | 0 | 0 | 1 | 0 | 1 | 0 | 1 | 0 | 0 | 0 | 1 | 1 |
| *Student 3* | 0 | 0 | 1 | 0 | 0 | 1 | 0 | 1 | 0 | 0 | 0 | 1 |
| *Student 4* | 0 | 1 | 1 | 0 | 0 | 0 | 0 | 1 | 1 | 1 | 0 | 1 |
| *Student 5* | 0 | 0 | 1 | 1 | 0 | 0 | 0 | 0 | 0 | 1 | 0 | 0 |

The average attentiveness scores calculated for each of the students, with respect to the entirety of the lecture and to each of the sub-parts, are shown in the following Table 4.

**Table 4**

| | **Average attentiveness for the entire lecture** | **Sub-part 1** | **Sub-part 2** | **Sub-part 3** | **Sub-part 4** |
|---|---|---|---|---|---|
| *Student 1* | **0.33** | **0.00** | 0.67 | **0.33** | **0.33** |
| *Student 2* | **0.42** | **0.33** | **0.33** | **0.33** | 0.67 |
| *Student 3* | **0.33** | **0.33** | **0.33** | **0.33** | **0.33** |
| *Student 4* | **0.50** | 0.67 | **0.00** | 0.67 | 0.67 |
| *Student 5* | **0.25** | **0.33** | **0.33** | **0.00** | **0.33** |
| **Average attentiveness for the sub-parts** | | **0.33** | **0.33** | **0.33** | **0.47** |
| **Average attentiveness for the lecture** | **0.37** | | | | |

It may be deduced that most of the students did not pay attention to the lecture. Such a reaction may be attributed to difficulty of the material, potential internet connection issues, etc.; as a result, the lecturer may need to cover the material again or ask the students for feedback on this particular lecture. In some cases, when it is determined that more than a specific percentage of attentiveness scores is lower than a threshold, the processor 112 of the server 110 is configured to transmit an alert to the lecturer device 120. In the example of Table 4, when the sub-part 1 is finished and it is determined that more than half of the students (the specific percentage) have attentiveness scores lower than 0.5 (the threshold), the processor 112 of the server 110 transmits an alert to the lecturer device 120 to notify the lecturer that the students are mostly not responding well to this sub-part of the lecture. As such, the lecturer may adjust rest of the lecture in real time by slowing down pace of the lecture, repeating materials previously taught, etc.

In another example, the attentiveness scores for each of the students are calculated with respect to individual lectures during a semester, and are as shown in the following Table 5. In the example, one attentiveness score may be determined every five minutes in the 60-minute lectures, and the resulting 12 attentiveness scores are used to calculate the average attentiveness score for each of the lectures.

**Table 5**

| | **Lectures taught in Semester** | | | | | |
|---|---|---|---|---|---|---|
| | **Lecture 1** | **Lecture 2** | **Lecture 3** | **Lecture 4** | **Lecture 5** | **Averag e** |
| *Student 1* | **0.4** | 0.5 | 0.6 | 0.7 | 0.8 | 0.6 |
| *Studen t2* | **0.25** | **0.35** | **0.55** | **0.45** | 0.5 | **0.42** |
| *Student 3* | 0.6 | **0.5** | **0.45** | **0.35** | **0.2** | **0.42** |
| *Student 4* | 0.7 | 0.8 | 0.7 | 0.8 | 0.7 | 0.74 |
| *Student 5* | **0.1** | **0.2** | **0.2** | **0.1** | **0.2** | **0.16** |

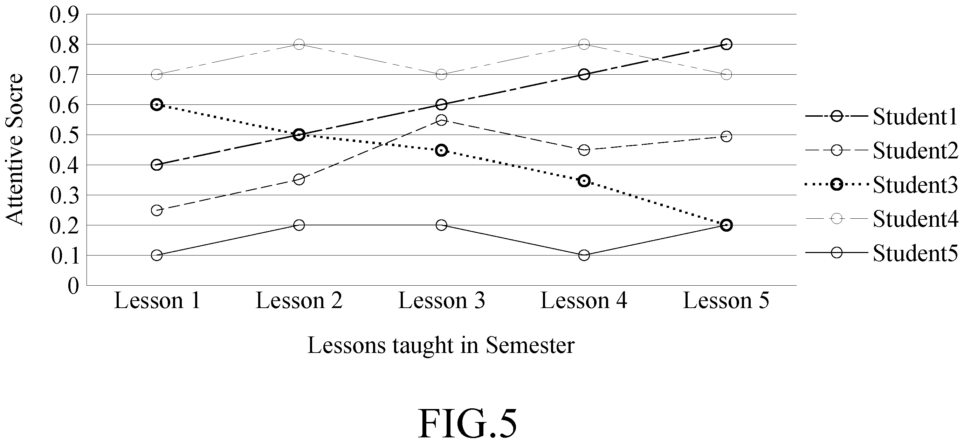

Using the calculated attentiveness scores, the lecturer may be notified of the progress of each of the students through the course of the semester, which may be represented by the graph as shown in Figure 5. In the example of Table 5, student 5 may need more attention as his/her attentiveness throughout the semester is consistently low. Additionally, using the graph as shown in Figure 5, it can be seen that students 1 and 2 are adjusting well as the semester progresses (their attentiveness showing an upward trend), and that student 3 may be not catching up (his/her attentiveness showing a downward trend).

The actual performance of each of the students may be further incorporated to collaborate with the above findings. For example, when student 3 and student 5 have poor grades, one may assume that student 3 and student 5 are struggling with the materials taught, and more assistance may need to be provided. Otherwise, when student 3 or 5 actually has good grades, it may be deduced that the materials taught may be too easy for student 2, 3 or 5.

It is noted that in different embodiments, after calculating the attentiveness scores, the further processing of the attentiveness scores (e.g., calculating the averages) may be done by either the server 110 or the lecturer device 120.

According to some embodiments, during the lecture, whenever a new attentiveness score or average attentiveness score is calculated, the resulted attentiveness scores may be immediately presented to the lecturer. For example, in response to receipt of the attentiveness scored from the server 110, when it is determined that a specific student has a low attentiveness score for a consistent period (e.g., 15 minutes, such as student 4 in the example of Table 1), the processor 122 of the lecturer device 120 may control the display 124 to display an alert element (e.g., a pop-up notification on the display 124) thereon, indicating that student 4 has not been paying attention.

In response, the lecturer may interact with the alert element (e.g., by clicking on the alert element using a mouse, or, in the case that the display 124 is a touch screen, by touching the alert element) so as to send an interaction command to the server 110. In response to receipt of the interaction command, an issuance of which is made based on the attentiveness score, from the lecturer device 120, the processor 112 of the server 110 is configured to create a direct communication interface between the lecturer device 120 and the student device 140. In embodiments, the direct communication interface may enable the lecturer and the student to text and/or speak to each other. In some embodiments, the direct communication interface may be embodied using an external communication application such as Web Real-Time Communication (WebRTC), but is not limited to that.

In one example, the lecturer may sent a text message to the student, or directly speak to the student during the lecture or recess. This may allow the lecturer more conveniently to interact with the student who was found to be not paying attention.

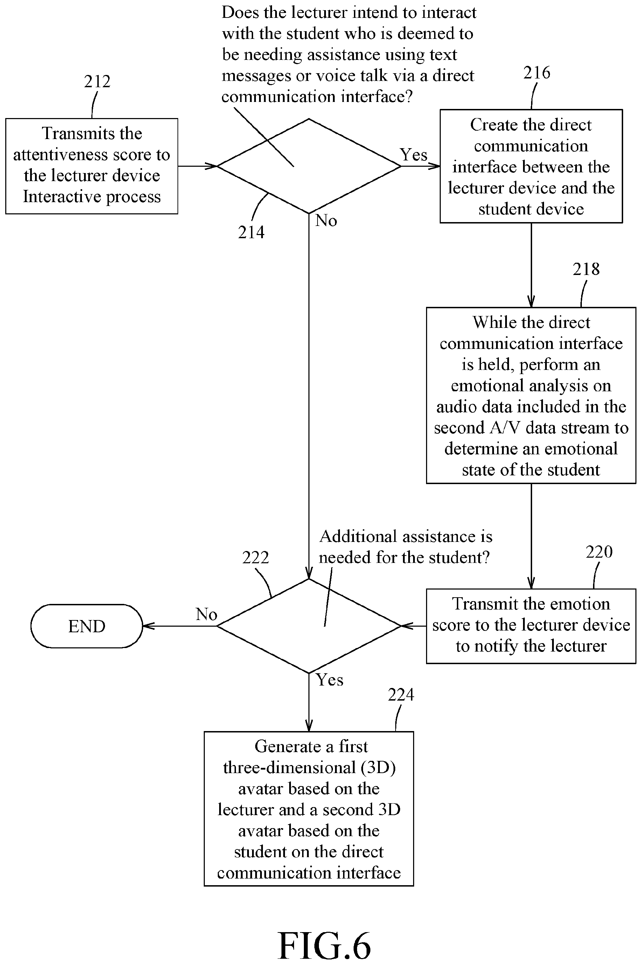

Figure 6 is a flow chart illustrating steps of an interactive process of the lecturer interacting with a student after determining that the student's attentiveness score (or an average attentiveness score) is below a threshold according to one embodiment of the disclosure. In this embodiment, the interactive process is implemented by the system of Figure 1, and is implemented after step 212 of the method of Figure 2. It is noted that the interactive process may be implemented during a lecture, during recess of the lecture, or after the lecture.

In step 214, in response to receipt of the attentiveness scores, the lecturer determines whether to interact with the student who is deemed to be needing assistance using text messages or voice talk via the direct communication interface. In the case that the lecturer determines to interact with the student using text messages or voice talk, the lecturer may operate the lecturer device 120 to transmit the interaction command to the server 110. Afterward, the flow proceeds to step 216, in which the server 110 creates the direct communication interface between the lecturer device 120 and the student device 140, and the lecturer is enabled to text the student or to directly talk to the student. Otherwise, in the case that the lecturer does not determine to interact with the student using text messages or voice talk, the flow proceeds to step 222.

It is noted that while the lecturer communicates with the student, the lecturer device 120 may continue to obtain the images and audio data, to record the first A/V data stream, and to transmit the first A/V data stream to the server 110. The student device 140 may continue to obtain the images and audio data, to record the second A/V data stream, and to transmit the second A/V data stream to the server 110.

In step 218, while the direct communication interface is held, the processor 112 of the server 110 is configured to perform an emotional analysis on audio data included in the second A/V data stream to determine an emotional state of the student. Specifically, the processor 112 may execute a voice analysis program to determine the emotional state of the student. In embodiments, the voice analysis program may be a speech emotion recognition program that includes neural network models that are pre-trained to be capable of detecting certain emotions in speeches. In use, features included in audio components of the second A/V data stream are extracted using a feature extraction function to obtain a numbers of Mel-frequency cepstral coefficients (MFCC), and the MFCCs may then be processed by the speech emotion recognition program to determine the emotional state of the student.

In embodiments, the speech emotion recognition program may be embodied using the open-source project "Speech Emotion Analyzer," which is in the form of a CNN model that is trained using open-source datasets such as Ryerson Audio-Visual Database of Emotional Speech and Song (RAVDESS), Surrey Audio-Visual Expressed Emotion (SAVEE) database, etc. The feature extraction function may be embodied using the open-source librosa library for MFCC. Alternatively, the speech emotion recognition program may be embodied using the open-source project "Audio Emotion Classification from Multiple Datasets," which is in the form of a CNN model that is trained using open-source datasets such as RAVDESS, Toronto emotional speech set (TESS), etc. The feature extraction function may be embodied using the open-source librosa library for MFCC and multi-channel speech separation (MCSS). Alternatively, the speech emotion recognition program may be embodied using the open-source project "Emovoice," which is in the form of a classification model based on the support vector machine classifier or the linear support vector machine classifier.

In this embodiment, the determined emotional state of the student may also be represented by an emotion score using a binary number [0, 1]. Specifically, in the case that the determined emotional state of the student is negative (e.g., afraid, sad, angry, etc.) the resulting emotion score may be 0, and in the case that determined emotional state of the student is positive (e.g., happy, calm, etc.) the resulting emotion score may be 1. It is noted that in other embodiments, the calculation of the emotion score may be done by using manners different from that as described above.

Then, in step 220, the server 110 transmits the emotion score to the lecturer device 120 to notify the lecturer.

In step 222, the lecturer determines whether additional assistance is needed for the student. This scenario may come up when the lecturer determines that the voice talk with the student did not produce a desired result (due to the student's emotion state being negative), or when the lecturer determines in step 214 that the attentiveness score of the student is not satisfactory, and additional assistance is needed for the student. When the lecturer determines that additional assistance is needed for the student, he/she may operate the interface of the lecturer device 120 to send a signal to the server 110, and the flow proceeds to step 224. Otherwise, the interactive process is terminated, and the lecturer may interact with the student later.

In step 224, the processor 112 generates a first three-dimensional (3D) avatar based on the lecturer and a second 3D avatar based on the student on the direct communication interface. Then, the first 3D avatar is transmitted to the student device 140, and the second 3D avatar is transmitted to the lecturer device 120. The generation of the first 3D avatar may be done by the processor 112 executing a 3D avatar generating program based on the images included in the first A/V data stream, and generation of the second 3D avatar may be done by the processor 112 executing a 3D avatar generating program based on the images included in the second A/V data stream.

In embodiments, the 3D avatar generating program may be embodied using the open-source project "Video avatars" that is configured to perform construction of a 3D avatar based on video images. Alternatively, the 3D avatar generating program may be embodied using the open-source project "PIXIE: Collaborative Regression of Expressive Bodies."

In the manner as described above, the interaction between the lecturer and the student may be more realistic.

In sum, the embodiments of the disclosure provide a method and a system for managing a VC. During a lecture held in the VC, the images of the students may be captured and processed by a server to calculate attentiveness scores based on the images, so as to determine whether each of the students is paying attention to the lecture. The determination may be done periodically to further analyze the students' reactions with respect to sub-parts of the lecture, and individual student's reactions during the course of the lecture. Additionally, the students' reactions with respect to individual lectures during the course of a semester may be analyzed. In the case that a particular student is in need of assistance based on the attentiveness scores of the student, the lecturer may choose to open a direct communication interface between a lecturer device and a student device. While the direct communication interface is generated, the server may perform an emotional analysis on audio data included in the second A/V data stream to determine an emotional state of the student. When the emotional state of the student is determined to be negative, the lecturer may further adopt a virtual face-to-face communication, in which the server generates a 3D avatar to be displayed by the student device. In this manner, the method and the system may improve experience of the VC in at least distance education, as the lecturer may be more informed of the students' reactions, and the students may get instant assistance from the lecturer.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for managing a virtual classroom, the method being implemented using a system (100) that includes a server (110), a lecturer device (120) that is associated with a lecturer and that is in communication with the server (110), and at least one student device (140) that is associated with a student and that is in communication with the server (110), the method **characterized by**:
recording, by the lecturer device (120), a first audio/video (A/V) data stream associated with the lecturer, and transmitting the first A/V data stream to the server (110);
in response to receipt of the first A/V data stream from the lecturer device (120), transmitting, by the server (110), the first A/V data stream to the student device (140);
in response to receipt of the first A/V data stream from the server (110), presenting, by the student device (140), the first A/V data stream to the student;
recording, by the student device (140), a second A/V data stream associated with the student, and transmitting the second A/V data stream to the server (110);
in response to receipt of the second A/V data stream, performing, by the server (110) based on the second A/V data stream, a calculation of an attentiveness score associated with attention of the student responding to the first A/V data stream; and
transmitting the attentiveness score to the lecturer device (120).

2. The method as claimed in Claim 1, wherein the method further includes:
in response to receipt of an interaction command, an issuance of which is made based on the attentiveness score from the lecturer device, creating, by the server (110), a direct communication interface between the lecturer device (120) and the student device (140).

3. The method as claimed in Claim 2, wherein the method further includes:
while the direct communication interface is held, performing an emotional analysis on audio data included in the second A/V data stream to determine an emotional state of the student.

4. The method as claimed in Claim 2 or 3, wherein the method further includes generating a first three-dimensional (3D) avatar based on the lecturer and a second 3D avatar based on the student on the direct communication interface.

5. The method as claimed in any one of Claims 1 to 4, wherein the second A/V data stream includes a plurality of images of the student, and the attentiveness score is calculated based on the images included in the plurality of images, using the Bimodal Emotion Classification.

6. The method as claimed in any one of Claims 1 to 5, wherein the step of calculating the attentiveness score is performed periodically.

7. The method as claimed in Claim 1, the system including a plurality of student devices (140) each being associated with a student and being in communication with the server (110), wherein:
the server (110) transmits the first A/V data stream to each of the student devices (140);
each of the student devices (140) records a unique second A/V data stream associated with the corresponding student, and transmits the unique second A/V data stream to the server (110);
the server (110) calculates a plurality of attentiveness scores associated with attention of the students, respectively; and
the method further includes, when it is determined that more than a specific percentage of attentiveness scores are lower than a threshold, transmitting an alert to the lecturer device (120).

8. The method as claimed in Claim 7, wherein:
the step of calculating the plurality of attentiveness scores associated with attention of the students is performed periodically; and
the method further includes, when it is determined that more than a specific percentage of attentiveness scores during a period are lower than a threshold, transmitting an alert to the lecturer device (120).

9. A system (100) for managing a virtual classroom, the system (100) including a server (110), a lecturer device (120) that is associated with a lecturer and that is in communication with the server (110), and at least one student device (140) that is associated with a student and that is in communication with the server (110), **characterized in that** the system (100) is configured to perform the following operations of:
recording, by the lecturer device (120), a first audio/video (A/V) data stream associated with the lecturer, and transmitting the first A/V data stream to the server (110);
in response to receipt of the first A/V data stream from the lecturer device (120), transmitting, by the server (110), the first A/V data stream to the student device (140);
in response to receipt of the first A/V data stream from the server (110), presenting, by the student device (140), the first A/V data stream to the student;
recording, by the student device (140), a second A/V data stream associated with the student, and transmitting the second A/V data stream to the server (110);
in response to receipt of the second A/V data stream, performing, by the server (110) based on the second A/V data stream, a calculation of an attentiveness score associated with attention of the student responding to the first A/V data stream; and
transmitting the attentiveness score to the lecturer device (120).

10. The system (100) as claimed in Claim 9, wherein the system (100) is further configured to perform the operations of:
in response to receipt of an interaction command, an issuance of which is made based on the attentiveness score from the lecturer device, creating, by the server (110), a direct communication interface between the lecturer device (120) and the student device (140).

11. The system (100) as claimed in Claim 10, wherein the system (100) is further configured to perform the operations of:
while the direct communication interface is held, performing an emotional analysis on audio data included in the second A/V data stream to determine an emotional state of the student.

12. The system (100) as claimed in Claim 10 or 11, wherein the system (100) is further configured to perform the operation of generating a first three-dimensional (3D) avatar based on the lecturer and a second 3D avatar based on the student on the direct communication interface.

13. The system (100) as claimed in any one of Claims 9 to 12, wherein the second A/V data stream includes a plurality of images of the student, and the server (110) is configured to calculate the attentiveness score based on the images included in the plurality of images, using the Bimodal Emotion Classification.

14. The system (100) as claimed in any one of Claims 9 to 13, wherein the server (110) is configured to perform the calculating of the attentiveness score periodically.

15. The system (100) as claimed in Claim 9, the system (100) including a plurality of student devices (140) each being associated with a student and being in communication with the server (110), wherein:
the server (110) transmits the first A/V data stream to each of the student devices (140);
each of the student devices (140) records a unique second A/V data stream associated with the corresponding student, and transmits the unique second A/V data stream to the server (110);
the server (110) calculates a plurality of attentiveness scores associated with attention of the students, respectively; and
the method further includes, when it is determined that more than a specific percentage of attentiveness scores are lower than a threshold, transmitting an alert to the lecturer device (120).
